# EUROPÄISCHE PATENTSCHRIFT

(11) **EP 2 050 580 B1**
(45) Veröffentlichungstag und Bekanntmachung des Hinweises auf die Patenterteilung: **12.03.2014**
(21) Anmeldenummer: 08166233.0
(22) Anmeldetag: 09.10.2008
(51) Int. Cl.: B42D 3/12, B42D 25/24, B42D 25/305, G06K 19/077, G06K 19/02

(54) **Ausweisbüchlein mit integrierter Antenne**
Identification booklet with built-in antenna
Livret d'identité avec antenne integrée

(30) Priorität: 19.10.2007 DE 102007050495
(43) Veröffentlichungstag der Anmeldung: 22.04.2009
(73) Patentinhaber: PAV Card GmbH, 22952 Lütjensee (DE)
(72) Erfinder: Kistenmacher, Dirk, 21493 Fuhlenhagen (DE); Früchtenicht, Dierk, 22929 Schönberg (DE); Stapelfeldt, Mark, 23627 Groß Grönau (DE)
(74) Vertreter: Meissner, Bolte & Partner

(56) Entgegenhaltungen:
- WO-A1-97/35731
- WO-A1-2005/073907
- WO-A1-2006/000849
- WO-A1-2006/005396
- WO-A2-2006/029609
- DE-U1-202004 012 493
- US-A- 2 108 749

## Beschreibung

Die Erfindung betrifft ein Ausweisdokument in Buchform mit einer in den Bereich des Rückens und/oder Deckels integrierten Anordnung aus einem elektronischen Datenträger und einer Antenneneinrichtung nach dem Oberbegriff des Anspruchs 1.

Ein derartiges Ausweisdokument wird insbesondere in der deutschen Gebrauchsmusterschrift DE 20 2004 012 493 U1 bzw. in dem Dokument WO 2006/005369 A1 beschrieben. Bei jenem Ausweisdokument ist im Bereich des Buchrückens ein Chip zusammen mit einer Antenneneinrichtung integriert. Bei dieser Ausführungsform besteht allerdings das Problem, dass der Chip zusammen mit der Antenneneinrichtung vorsichtig aus dem Ausweisdokument herausgetrennt werden kann, wobei beide Komponenten in einem intakten funktionsfähigen Zustand verbleiben. Ein derartiger Umstand ist jedoch aus Gründen der Fälschungssicherheit nicht hinnehmbar. Es muss sichergestellt sein, dass Manipulationen unausweichlich zu einer irreversiblen Zerstörung mindestens des Chips oder der Antenneneinrichtung führen.

In der Druckschrift WO 2006/000849 A1 wird ein Identifikationsdokument beschrieben, welches bestimmte Sicherheitsmerkmale aufweist. Demnach ist das Dokument aus mehreren Schichten aufgebaut, wobei des Weiteren ein elektrisches Modul mit einer Antenne und einem Speicherelement vorgesehen ist. Sowohl um das Modul als auch in den einzelnen Schichten des Identifikationsdokumentes können Aussparungen vorgesehen sein, welche mit mechanisch und chemikalisch festem Kleber gefüllt sind, um die einzelnen Schichten sehr stark miteinander zu verbinden.

Aus der WO 2006/029609 A1 ist ein Wertdokument bekannt, welches aus einem Träger aus Papiermaterial und einer auf dem Träger aufgebrachten Laminierfolie besteht. Die Laminierfolie weist einen Trägerfilm und eine Dekorlage auf. Die Dekorlage kann beispielsweise Sicherheitsmerkmale oder Komponenten mit elektrischer Funktionalität enthalten. Die Laminierfolie ist zur Verringerung der Festigkeit mit Sollbruchstellen ausgestattet.

Es besteht die Aufgabe der Erfindung, ein aus dem Stand der Technik bekanntes Ausweisdokument der eingangs beschriebenen Art so weiter zu entwickeln, dass die Antenneneinrichtung bzw. der Chip irreversibel unbrauchbar gemacht werden, sobald der Versuch unternommen wird, diese Komponenten aus dem Ausweisdokument zu entfernen.

Die Lösung der Aufgabe erfolgt mit einem Ausweisdokument gemäß den Merkmalen des Anspruchs 1. Die zugehörigen Unteransprüche enthalten zweckmäßige bzw. vorteilhafte Ausführungsformen und Ausgestaltungen des erfindungsgemäßen Gegenstandes.

Das erfindungsgemäße Ausweisdokument zeichnet sich durch einen sicher irreversibel zerstörbaren Verbundaufbau aus einer die Antenneneinrichtung und/oder den Datenträger enthaltenden Antennenschicht und einer die Antennenschicht bedeckenden Kaschierung aus.

Die Antennenschicht weist eine Sollbruchstruktur aus Sollbruchlinien und Sollbruchelementen auf. Die Sollbruchlinien markieren die Bereiche, an denen die Antennenschicht aufbricht. Die Sollbruchelemente werden durch die dabei entstehenden Bruchstücke gebildet.

In Kombination dazu ist erfindungsgemäß eine nur im Bereich der Sollbruchelemente angeordnete Verbindungsstruktur zwischen der Kaschierung und/oder Kartonierung und der Antennenschicht vorgesehen. Dadurch werden die Sollbruchelemente beim Ablösen der Kaschierung mit abgehoben, wobei die Antennenschicht entlang der Sollbruchlinien unvermeidbar aufbricht und dadurch unbrauchbar wird.

Die Sollbruchlinien sind in einer ersten Ausführungsform als Perforationslinien ausgebildet. Derartige Linien bestehen aus dicht nebeneinander aufgereihten Perforationen, insbesondere Löchern oder Schlitzen, und dazwischen angeordneten kleinen, leicht durchtrennbaren Materialbrücken.

Bei einer zweiten Ausführungsform sind die Sollbruchlinien als Reißlinien ausgebildet. An diesen Stellen ist die Materialdicke der Antennenschicht so weit reduziert, dass ein Riss an dieser Stelle beim Ablösen der Schicht unvermeidlich ist.

Die Antennenschicht ist bei einer Ausführungsform als ein in den Rücken und/oder den Deckel des Ausweisdokumentes eingebrachtes, z.B. eingenähtes Kunststofflaminat mit einlaminiertem Speicherchip und einlaminierter Spuleneinrichtung ausgebildet.

Die Antennenschicht ist bei einer weiteren Ausführungsform als ein Bestandteil eines in den Ausweisrücken integrierten, mit dem Ausweisdokument unlösbar verbundenen, insbesondere vernähten, Vlieses oder Gewebes ausgebildet. Das Vlies oder Gewebe ist gegebenenfalls mindestens abschnittsweise in das Kunststofflaminat eingebracht und bildet insbesondere im Bereich des Rückens des Ausweisdokumentes ein flexibles Gelenkelement mit einer Sollbruchlinie zwischen dem Kunststofflaminat und dem Vlies oder Gewebe aus.

Das Vlies oder Gewebe ist bei einer zweckmäßigen Ausführungsform aus einem metallischen oder Kunststoffwerkstoff, insbesondere einem Faserwerkstoff, ausgeführt.

Das Ausweisdokument soll nachfolgend anhand von Ausführungsbeispiel näher erläutert werden. Zur Verdeutlichung dienen die Figuren 1 bis 3. Es werden für gleiche bzw. gleichwirkende Teile die selben Bezugszeichen verwendet.

Es zeigt:
- Fig. 1: ein Ausweisdokument in einer Gesamtansicht,
- Fig. 2: eine beispielhafte Sollbruchstruktur mit Sollbruchlinien und Sollbruchelementen in einer Antennenschicht und
- Fig. 3: beispielhafte Schnittdarstellungen durch einen Verbund aus Antennenschicht und Kaschierungen in zwei verschiedenen Ausführungsformen.

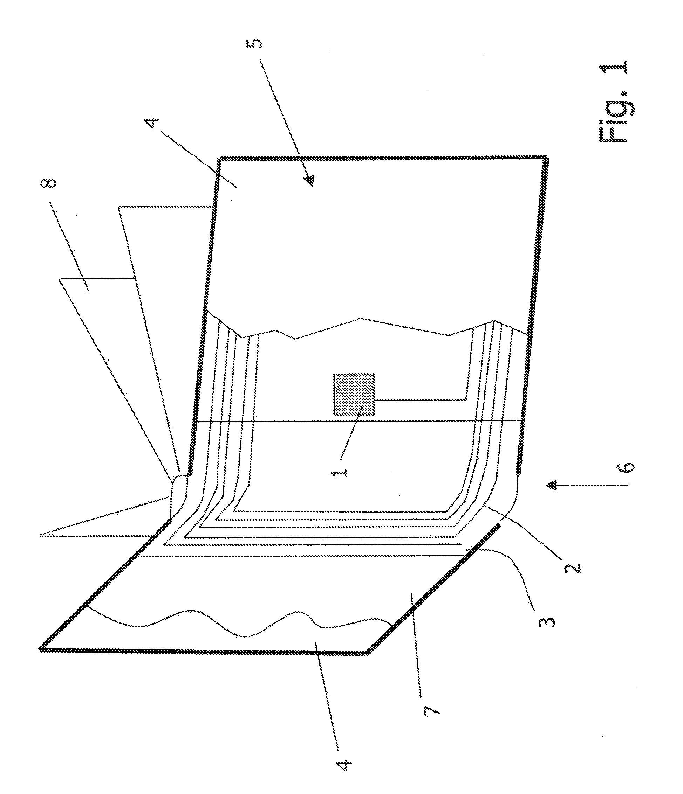

Fig. 1 zeigt ein Ausweisdokument in einer Gesamtansicht. Das Ausweisdokument enthält einen Datenträger 1, in diesem Fall einen Speicherchip, der mit einer Antenneneinrichtung 2, insgesamt ausgeführt als RFID-Element, gekoppelt ist. Die Antenneneinrichtung und der Datenträger sind in eine Antennenschicht 3 integriert. Bei der Antennenschicht handelt es sich beispielsweise um ein leitfähiges Kunststofflaminat. Alternativ dazu können auch Vliese, Gewebe oder entsprechend laminierte Verbundmaterialien verwendet werden.

Die Antennenschicht 3 ist von einer Kaschierung 4 überdeckt oder geht in die Kaschierung über. Bei der hier gezeigten Ausführungsform ist die Antennenschicht im Bereich des Deckels 5 und des Rückens 6 des Ausweisdokumentes angeordnet, während die Kaschierung die Antennenschicht und eine den Deckel bildende Kartonage 7 überdeckt.

In dem in der Figur gezeigten Ausführungsbeispiel überdeckt die Anordnung aus Antenneneinrichtung und Datenspeicher sowohl einen Teil des rückseitigen und vorderseitigen Deckels als auch des Rückens des Ausweisdokumentes. Dieser Verbund ist in den Deckel des Ausweisdokumentes unlösbar eingearbeitet und kann nur durch Zerstörung des Deckels bzw. des Kunststofflaminates entfernt werden. Dazu ist beispielsweise das Kunststofflaminat mit dem aus Pappe oder Kunststoff bestehenden Grundkörper des Deckels verklebt oder vernäht und mit der Kaschierung des Deckels überdeckt und zusätzlich unlösbar so verbunden, dass die Kaschierung nur durch eine irreversible Beschädigung des Ausweisdokumentes vom Bereich des Kunststofflaminates entfernt werden kann.

Bei einer Ausführungsform geht im Bereich des Rückens des Ausweisdokumentes das Kunststofflaminat in ein Vlies oder Gewebe über, das als flexibles Material einen Teil des Rückens bildet. Der Übergang zwischen dem Vlies und dem Kunststofflaminat der Antennenschicht ist zweckmäßigerweise als eine Sollbruchstelle ausgebildet.

Das Vlies bzw. das Gewebe bestehen vorzugsweise aus Kunststofffasern, die innerhalb des Gewebes die Leiterbahnen der Antenneneinrichtung enthalten. Vorteilhafterweise ist das Vlies bzw. das Gewebe in das bereits erwähnte Kunststofflaminat eingebracht, d.h. zwischen den Oberflächen einlaminiert und innerhalb des Laminates mit dem Datenträger verbunden.

Weiterhin ist das Vlies bzw. das Gewebe mit dem Grundkörper des Deckels bzw. den weiteren Komponenten des Rückens so verbunden, insbesondere verklebt oder vernäht, dass ein Heraustrennen des Vlieses bzw. Gewebes zu dessen irreversibler Zerstörung führt.

Dabei bilden die Abschnitte des auf den Deckeln des Ausweisdokumentes angeordneten Kunststofflaminates in Verbindung mit dem innerhalb des Rückens angeordneten Vlies oder Gewebe eine Gelenkverbindung aus, die ein Aufklappen bzw. Schließen der Deckel gestattet und gleichzeitig eine kontaktlose Datenübertragung zwischen der Antenneneinrichtung und externen Lesegeräten ermöglicht.

Es ist eine Reihe von abgewandelten Ausführungsformen möglich, bei denen die gesamte Anordnung aus Kunststofflaminat bzw. Vlies oder Gewebe in den Deckel des Ausweisdokumentes integriert sind. Zum Beispiel kann das Vlies bzw. Gewebe aus Sicherheitsgründen mehrfach mit der Kaschierung des Deckels verbunden, beispielsweise versteppt sein.

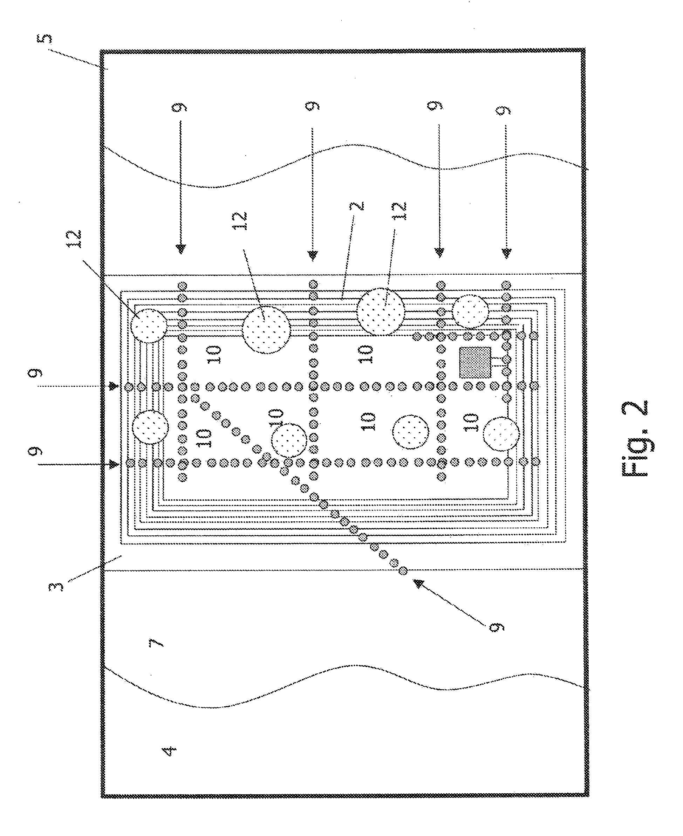

Fig. 2 zeigt die Antennenschicht des Ausweisdokumentes in einer detaillierten Ansicht. Die Antennenschicht 3 und dabei auch die Antenneneinrichtung 2 mit dem Chip 1, ist durch eine Reihe von Sollbruchlinien 9 in Sollbruchelemente 10 unterteilt. Die Antennenschicht zerfällt beim Versuch eines Herauslösens entlang der Sollbruchlinien 9. Dabei wird die Antenneneinrichtung 2 zerstört und irreversibel unbrauchbar gemacht. Über eine Reihe von Klebestellen 12 ist die Antennenschicht mit der Kaschierung und/oder der Kartonierung verbunden.

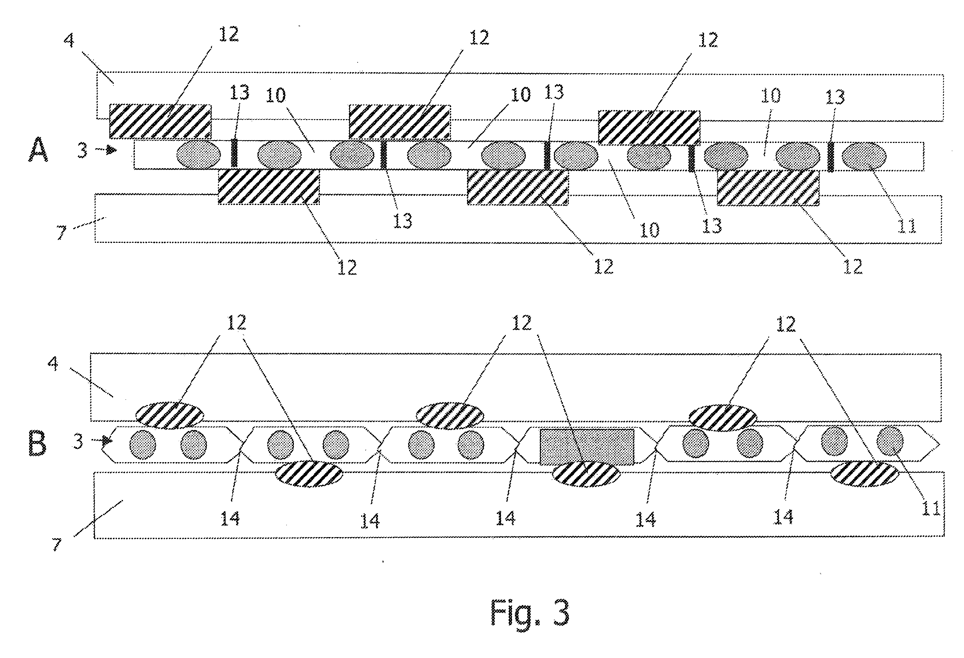

Fig. 3 zeigt zwei beispielhafte Verbunde A und B zwischen Antennenschicht, Kaschierung und Kartonage im Schnitt. Die Antennenschichten 3 sind bei den dargestellten Beispielen jeweils oben und unten von den Kaschierungen 4 bedeckt. Die Antennenschicht 3 enthält die für die Antenneneinrichtungen notwendigen Leiterbahnen 11 und die Sollbruchlinien. Diese sind in Beispiel A als Perforationen 13 und in dem Beispiel B als Sollrisslinien 14 in Form von Abschnitten mit geringerer Materialdicke ausgebildet. Zur Verbindung der Antennenschicht mit der unteren bzw. der oberen Kaschierung sind wechselseitig die Klebestellen 12 in einem bestimmten, insbesondere punkt- oder streifenförmigen Muster angeordnet. Das Muster verläuft im wesentlichen so, dass jeweils ein durch die Sollbruchlinien abgeteiltes Sollbruchelement 10 entweder ausschließlich mit der Kaschierung oder der Kartonage verklebt ist. Beim Auseinanderziehen von Kaschierung und Kartonage werden die verbundenen Sollbruchelemente in verschiedene Richtungen gezogen, wobei die Sollbruchlinien aufbrechen und einen Bruch der Antennenschicht mindestens in einem Abschnitt herbeiführen. Es genügt, wenn nur einige wenige Sollbruchelemente aus dem Verband der Antennenschicht herausbrechen, solange gewährleistet ist, dass der Verband der Antennenbahnen 11 zumindest abschnittsweise irreversibel zerstört ist. Hierzu müssen die Klebestellen hinreichend fest sein. Dies lässt sich dadurch erreichen, indem entweder ein Klebemittel zum Ausbilden einer hochfesten Verbindung zwischen Antennenschicht und Kaschierung verwendet wird, oder durch geeignete Verfahren, beispielsweise ein partielles Aufschmelzen, eine stoffschlüssige Verbindung zwischen dem Grundmaterial der Antennenschicht und der Kaschierung erzeugt wird.

Die Erfindung wurde anhand beispielhafter Ausführungsformen erläutert. Im Rahmen fachmännischen Handelns sind weitere Ausgestaltungen möglich. Weitere Ausführungsformen ergeben sich aus den Unteransprüchen.

### Bezugszeichenliste

- 1: Datenträger
- 2: Antenneneinrichtung
- 3: Antennenschicht
- 4: Kaschierung
- 5: Deckel
- 6: Rücken
- 7: Kartonage
- 8: Ausweisseite
- 9: Sollbruchlinie
- 10: Sollbruchelement
- 11: Leiterbahn
- 12: Klebestelle
- 13: Perforation
- 14: Sollrisslinie

## Patentansprüche

1. Ausweisdokument in Buchform mit einer in den Bereich des Rückens und/oder Deckels integrierten Anordnung aus einem elektronischen Datenträger (1) und einer Antenneneinrichtung (2), sowie einen sicher irreversibel zerstörbaren Verbundaufbau aus einer die Antenneneinrichtung und/oder den Datenträger enthaltenden Antennenschicht (3) und einer die Antennenschicht bedeckenden Kaschierung (4),
**gekennzeichnet durch**
eine die Antennenschicht (3) durchziehende Sollbruchstruktur aus Sollbruchlinien (9) und Sollbruchelementen (10) und eine im wesentlichen nur im Bereich der Sollbruchelemente (10) angeordnete Verbindungsstruktur (12) zwischen der Antennenschicht und der Kaschierung und/oder einer Kartonierung.

2. Ausweisdokument nach Anspruch 1,
**dadurch gekennzeichnet, dass**
die Sollbruchlinien als Perforationslinien (13) ausgebildet sind.

3. Ausweisdokument nach Anspruch 1,
**dadurch gekennzeichnet, dass**
die Sollbruchlinien als Reißlinien (14) ausgebildet sind.

4. Ausweisdokument nach einem der vorhergehenden Ansprüche,
**dadurch gekennzeichnet, dass**
die Antennenschicht (3) als ein in den Rücken und/oder den Deckel (5) eingebrachtes, insbesondere eingenähtes, Kunststofflaminat mit einlaminiertem Speicherchip und/oder einlaminierter Spuleneinrichtung ausgebildet ist.

5. Ausweisdokument nach einem der vorhergehenden Ansprüche,
**dadurch gekennzeichnet, dass**
die Antennenschicht (3) als ein Bestandteil eines in den Ausweisrücken integrierten, mit dem Ausweisdokument unlösbar verbundenen, insbesondere vernähten, Vlieses oder Gewebes ausgebildet ist.

6. Ausweisdokument nach Anspruch 5,
**dadurch gekennzeichnet, dass**
das Vlies oder Gewebe mindestens abschnittsweise in das Kunststofflaminat eingebracht ist und insbesondere ein im Bereich des Rückens angeordnetes flexibles Gelenkelement mit einer Sollbruchlinie zwischen dem Kunststofflaminat und dem Vlies oder Gewebe ausbildet.

7. Ausweisdokument nach einem der Ansprüche 5 oder 6,
**dadurch gekennzeichnet, dass**
das Vlies oder Gewebe aus einem metallischen oder Kunststoffwerkstoff, insbesondere einem Faserwerkstoff, ausgeführt ist.

## Claims

1. Identification document in book form, comprising an assembly of an electronic data carrier (1) and an antenna unit (2) integrated in the region of the back and/or cover, as well as a sandwich structure of an antenna layer (3) containing the antenna unit and/or the data carrier and a lamination (4) covering the antenna layer, the sandwich structure being destructible in a reliably irreversible manner,
**characterized by**
a predetermined breaking structure running through the antenna layer (3) and consisting of predetermined breaking lines (9) and predetermined breaking elements (10), and a connection structure (12) between the antenna layer and the lamination and/or a cardboard, the connection structure (12) being arranged substantially only in the region of the predetermined breaking elements (10).

2. Identification document according to claim 1,
**characterized in that**
the predetermined breaking lines are configured as perforation lines (13).

3. Identification document according to claim 1,
**characterized in that**
the predetermined breaking lines are configured as tear lines (14).

4. Identification document according to one of the preceding claims,
**characterized in that**
the antenna layer (3) is configured as a plastic laminate with a memory chip laminated into same and/or a coil unit laminated into same, the plastic laminate being incorporated, in particular sewn into the back and/or the cover (5).

5. Identification document according to one of the preceding claims,
**characterized in that**
the antenna layer (3) is configured as a component of a non-woven fabric or woven fabric integrated in the back of the identification document and inseparably connected, in particular sewn to the identification document.

6. Identification document according to claim 5,
**characterized in that**
the non-woven fabric or woven fabric is incorporated at least section-wise into the plastic laminate and in particular forms a flexible joint element, which is arranged in the region of the back, with a predetermined breaking line between the plastic laminate and the non-woven fabric or woven fabric.

7. Identification document according to one of claims 5 or 6,
**characterized in that**
the non-woven fabric or woven fabric is made of a metallic or plastic material, in particular a fibrous material.

## Revendications

1. Document d'identité sous forme de livret avec un agencement, intégré dans la région du dos et/ou de la couverture, formé d'un support de données électronique (1) et d'un dispositif formant antenne (2), ainsi que d'une superstructure composite sûre irréversiblement destructible formée d'une couche antenne (3) contenant le dispositif formant antenne et/ou le support de données, et d'un doublage (4) recouvrant la couche antenne,
**caractérisé par**
une structure de rupture de consigne traversant la couche antenne (3) formée de lignes de rupture de consigne (9) et d'éléments de rupture de consigne (10), et par une structure de liaison (12) agencée dans la région des éléments de rupture de consigne (10) entre la couche antenne et le doublage et/ou un cartonnage.

2. Document d'identité selon la revendication 1,
**caractérisé en ce que** les lignes de rupture de consigne sont réalisées sous forme de lignes de perforations (13).

3. Document d'identité selon la revendication 1,
**caractérisé en ce que** les lignes de rupture de consigne sont réalisées sous forme de lignes de déchirure (14).

4. Document d'identité selon l'une des revendications précédentes,
**caractérisé en ce que** la couche antenne (3) est réalisée sous la forme d'un stratifié en matière plastique introduit entre le dos et/ou la couverture (5), en particulier cousu, avec une puce mémoire intégrée par stratification et/ou un système à bobine intégré par stratification.

5. Document d'identité selon l'une des revendications précédentes,
**caractérisé en ce que** la couche antenne (3) est réalisée à titre d'élément constitutif d'un non-tissé ou d'un tissu intégré dans le dos du document d'identité et relié de manière à détachable avec le document d'identité, en particulier par couture.

6. Document d'identité selon la revendication 5,
**caractérisé en ce que** le non-tissé ou le tissu est introduit au moins par tronçons dans le stratifié en matière plastique, et forme en particulier un élément d'articulation flexible agencé dans la région du dos, avec une ligne de rupture de consigne entre le stratifié de matière plastique et le non-tissé ou le tissu.

7. Document d'identité selon l'une des revendications 5 ou 6,
**caractérisé en ce que** le non-tissé ou le tissu est réalisé à partir d'un matériau métallique au d'une matière plastique, en particulier un matériau à base de fibres.
